# EUROPÄISCHE PATENTSCHRIFT

(11) **EP 0 564 898 B1**
(45) Veröffentlichungstag und Bekanntmachung des Hinweises auf die Patenterteilung: **31.01.1996**
(21) Anmeldenummer: 93104820.1
(22) Anmeldetag: 24.03.1993
(51) Int. Cl.: B62D 1/18, B60R 21/22

(54) **Lenksäule mit einem Sicherheitsglied für ein im Lenkrad mit einem aufblasbaren Gassack ausgerüstetes Kraftfahrzeug**
Steering column with a safety member for a motor vehicle equipped with an inflatable airbag in the steering wheel
Colonne de direction avec un membre de sécurité, pour un véhicule à moteur équipé d'un coussin d'air gonflable

(30) Priorität: 07.04.1992 DE 4211674
(43) Veröffentlichungstag der Anmeldung: 13.10.1993
(73) Patentinhaber: LEMFOERDER METALLWAREN AG., D-49441 Lemförde (DE)
(72) Erfinder: Schäfer, Burkhard, Dipl.-Ing., W-2805 Stuhr-Seckenhausen (DE); Grams, Kai-Uwe, Dipl.-Ing., W-4598 Cappeln (DE)
(74) Vertreter: Bruse, Willy Hans Heinrich

(56) Entgegenhaltungen:
- EP-A- 0 045 230
- DE-A- 3 409 987
- DE-A- 3 619 472
- DE-A- 4 105 821
- DE-C- 3 427 211
- GB-A- 1 500 111
- PATENT ABSTRACTS OF JAPAN vol. 015, no. 416 (M-1172)23. Oktober 1991 & JP-A-03 176 251 (MAZDA MOTOR CORP) 31. Juli 1991
- PATENT ABSTRACTS OF JAPAN vol. 015, no. 427 (M-1174)30. Oktober 1991 & JP-A-03 178 849 (MAZDA MOTOR CORP) 2. August 1991

## Beschreibung

Die Erfindung betrifft eine Lenksäule mit einem Sicherheitsglied für ein im Lenkrad mit einem aufblasbaren Gassack ausgerüstetes Kraftfahrzeug nach dem Oberbegriff des Patentanspruches 1. Eine solche Lenksäule ist zum Beispiel aus der JP-A-3178849 bekannt.

Dieser Stand der Technik ergibt sich auch aus der DE 34 09 987 -C2-in Verbindung mit der EP 0 045 230 -B1-. Beide Druckschriften offenbaren Lenksäulen, bei denen die Neigung des Lenkrades einstellbar und die eingestellte Position verriegelbar ist. Bei der Anordnung nach der DE 34 09 987 -C2- erfolgt dies zwar durch formschlüssigen Eingriff einer an beiden Gehäuseteilen vorgesehenen Verzahnung, aber die EP 0 045 230 -B1- offenbart dafür eine Klemmvorrichtung zur reibschlüssigen Verriegelung der eingestellten Position, wie sie an sich auch aus anderen Druckschriften bekannt ist, die lediglich höhenverstellbare Lenksäulen betreffen. Abweichend von der durch die Erfindung berührten Gattung ist bei der EP 0 045 230 -B1- die Anlenkung eines Lenksäulenkopfgehäuses unmittelbar an der Karosserie, so daß die Lenkwelle unterhalb des Kreuzgelenkes bei der Verstellung der Lenkradneigung ebenfalls verlagert wird. Komfortansprüchen genügt diese Lösung daher nicht. Bekannt ist aus dieser Druckschrift außerdem eine Klemmvorrichtung aus einem Bündel laminar angeordneter Bleche mit einem diese durchgreifenden Spannbolzen mit einer von Hand betätigbaren Verschraubung, wobei die Bleche abwechselnd am Kopfgehäuse und an einem Karosserieteil befestigt sind.

In zunehmendem Maße werden Kraftfahrzeuge im Lenkrad mit einem Gassack ausgerüstet, der bei einem Frontaufprall des Fahrzeugs durch Steuerglieder explosionsartig aufgeblasen wird und ein Polster für den Oberkörper des Fahrzeuglenkers bildet. Die angestrebte Wirkung wird jedoch nur erreicht, wenn die Lenksäule mit ihrer Mittellängsachse unter einem bestimmten Neigungswinkel im Fahrzeug angeordnet ist, so daß der Gassack sich zwischen dem nach vorne geschleuderten Körper des Fahrzeuglenkers und dem Lenkrad aufweitet. Bei Fahrzeugen mit sehr steil angeordneter Lenksäule sind Sicherheitseinrichtungen aus einem aufblasbaren Gassack wirkungslos.

Aufgabe der Erfindung ist es, eine Lenksäule für Kraftfahrzeuge mit einem im Lenkrad eingebauten, aufblasbaren Gassack in der Weise auszubilden, daß die Neigungslage des Lenkrades bei der Zündung zum Aufblasen des Gassacks selbsttätig in eine Kippstellung gelangt, in der die Aufprallkräfte des Körpers des Fahrzeuglenkers über den Gassack etwa koaxial in die Lenksäule eingeleitet werden.

Diese Aufgabe löst die Erfindung durch Ausbildungsmerkmale nach dem Patentanspruch 1.

Die Anwendung dieser Ausbildungsmerkmale betrifft vorwiegend Lenksäulen, die mit ihrer Mittellängsachse unter einem sehr flachen (stumpfen) Winkel gegenüber der Horizontalen in ein Fahrzeug eingebaut werden. Insbesondere kann eine Ausbildung mit Erfindungsmerkmalen bei einer Lenksäule mit einstellbarer Neigung des Lenkrades vorgenommen werden. Der Erfindung liegt der Gedanke zugrunde, die bei der Zündung des Gassacks nach einem Frontaufprall wirksame Rückstoßenergie in der Weise zu nutzen, daß Bruchkräfte, die zur Zerstörung eines beide Gehäuseteile verriegelnden Sicherungsgliedes erforderlich sind, oder Lösekräfte, die zur Aufhebung der reibschlüssigen Verbindung des oberen und des unteren Gehäuses ausreichen, überwunden werden und der obere Teil der Lenksäule durch eine Schwenkbewegung etwa koaxial zu dem unteren Teil der Lenksäule ausgerichtet wird, wobei dieser untere Teil bereits mit einer Neigungslage eingebaut ist, die der Wirkungsrichtung der Aufprallkräfte des Körpers des Fahrzeuglenkers entspricht. In der Praxis bedeutet dies, daß der Kopf der Lenksäule durch die Zündung des Gassacks in Richtung gegen den Körper des Fahrzeuglenkers verschwenkt wird, so daß sich der Gassack zwischen dem Lenkrad und dem Körper des Fahrzeuglenkers aufbläht, um die aus dem Aufprall herrührenden Beschleunigungskräfte koaxial in die nunmehr im wesentlichen gestreckte Lenksäule einzuleiten. Vorteilhaft wird die Lenksäule in dieser gestreckten Lage der Achsen beider Lenkwellenteile zwangsläufig verriegelt, um zu verhindern, daß der Kopf der Lenksäule zurückschnellt.

Da die bei der Zündung des Gassacks ausgelösten Rückstoßkräfte wesentlich größer sind als die zur Positionshaltung des Lenkrades notwendigen Reibungskräfte einer reibschlüssigen Verbindung zwischen den beiden Gehäuseteilen, eignet sich die Anwendung der Erfindungsmerkmale in besonderer Weise für Lenksäulen mit einstellbarer Neigung des Lenkrades. Ein entsprechendes Ausführungsbeispiel wird nachfolgend anhand der Zeichnung erläutert.

Auf der Zeichnung zeigen:
- Figur 1: einen Schnitt in einer Achsebene durch das obere Ende einer Lenksäule in der Betriebsstellung,
- Figur 2: den gleichen Schnitt nach Überwindung der reibschlüssigen Verbindung zwischen beiden Gehäuseteilen und
- Figur 3: einen Schnitt etwa nach der Linie II - II in Figur 1.

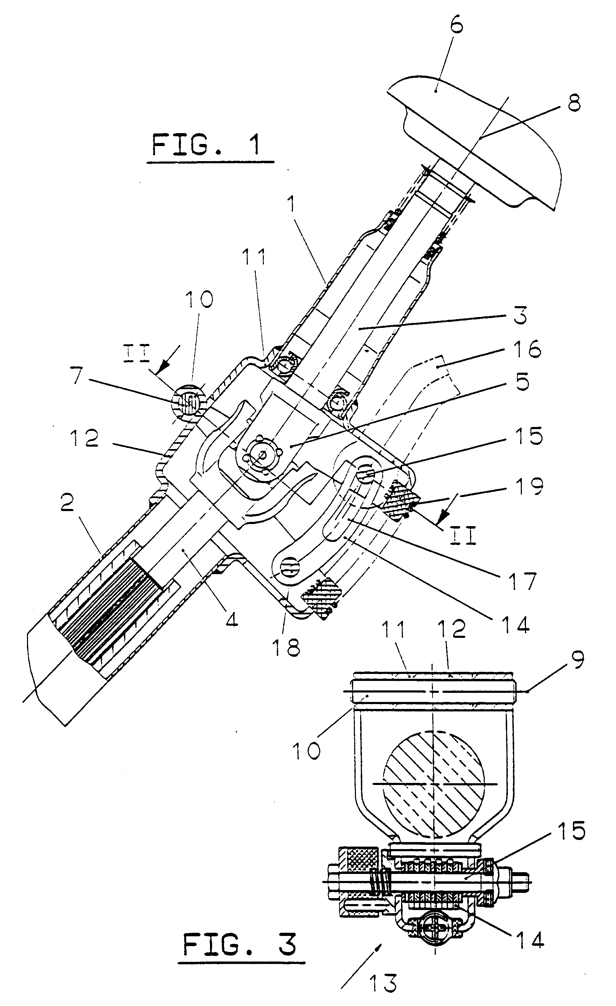

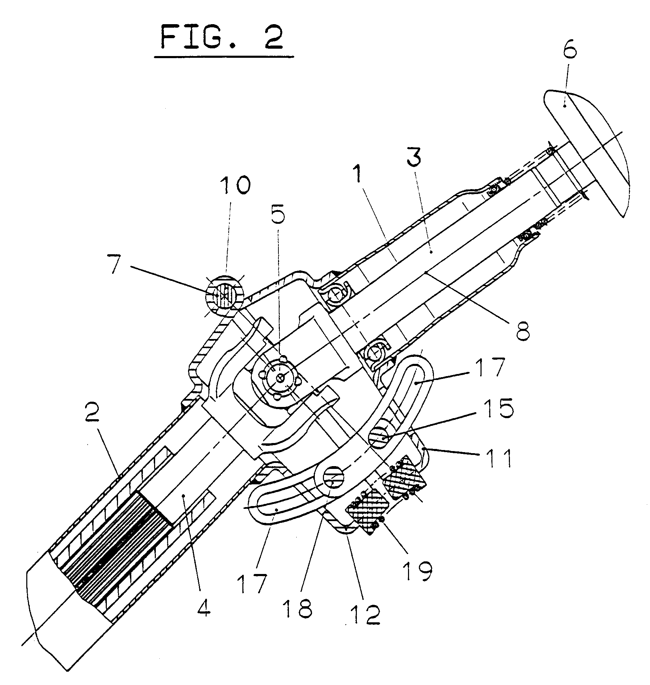

Die Lenksäule besteht aus dem oberen Gehäuseteil 1 und dem unteren Gehäuseteil 2, in dem ein oberes Lenkwellenteil 3 und ein unteres Lenkwellenteil 4 drehbar gelagert sind. Die beiden Gehäuseteile 1 und 2 bilden ein Mantelrohr. Die Lenkwellenteile 3 und 4 sind durch ein Kreuzgelenk 5 miteinander verbunden. Auf dem freien Ende des oberen Lenkwellenteiles 3 ist das Lenkrad 6 befestigt. An den einander zugekehrten Enden sind die Gehäuseteile 1 und 2 etwa im Bereich des Kreuzgelenkes 5 mit einer schalenförmigen Erweiterung versehen und durch ein scharnierartiges Gelenk 7 miteinander verbunden, welches oberhalb der Mittellängsachse 8 der Lenksäule und mit einem radialen Abstand von dieser angeordnet ist. Der mit seiner Achse 9 außerhalb des Gehäuses liegende Bolzen 10 dieses Scharniergelenks 7 verbindet die an den beiden Gehäuseteilen 1 und 2 befestigten schalenartigen Erweiterungen 11 bzw. 12. Auf der dem Bolzen 10 etwa diametral zur Mittellängsachse 8 gegenüberliegenden Seite sind die Schalenteile 11 und 12 durch eine Klemmvorrichtung 13 reibschlüssig miteinander verbunden, wobei die Mittellängsachse 8 des oberen Lenkwellenteiles 3 und des unteren Lenkwellenteiles 4 einen zur Seite des Gelenks 7 hin offenen Winkel bilden, wie es sich aus der Figur 1 ergibt. Die Klemmvorrichtung besteht aus mehreren laminar zueinander angeordneten Blechen 14, die abwechselnd an einem der beiden Schalenteile 11 und 12 befestigt sind und von einem Spannbolzen 15 mit einer gegebenenfalls durch eine Handhabe 16 betätigbaren Verschraubung durchgriffen werden. Eine Schwenkbewegung der beiden Schalenteile 11 und 12 um die Achse 9 des Bolzens 10 gegeneinander in die in Figur 2 dargestellte Lage wird dadurch ermöglicht, daß die Bleche 14 jeweils an einem Ende einen Schlitz 17 aufweisen, der entweder von dem Spannbolzen 15 oder von einem Befestigungsbolzen 18 durchgriffen wird. Bei einer gelösten Klemmvorrichtung 13 kann das bewegliche obere Ende der Lenksäule um die Achse 9 des Gelenks 7 verstellt und die eingestellte Position durch eine Betätigung der Klemmvorrichtung fixiert werden. Zwischen den beiden gegeneinander beweglichen Schalenteilen 11 und 12 ist außerdem ein Puffer aus einer Schraubenfeder 19 angeordnet, der die Verstellbewegungen bei der Neigungseinstellung des Lenkrades 6 erleichtert, weil er wenigstens einen Teil des Gewichts des Lenksäulenkopfes kompensiert. Außerdem ist für die Endlage der beiden Gehäuseteilenach der Gassackzündung und der dadurch bewirkten Schwenkbewegung eine Zwangsverriegelung vorgesehen, um das Zurückschnellen des Lenksäulenkofes zu verhindern. Die Schwenkbewegung der beiden Schalenteile 11 und 12, die einerseits an dem oberen Gehäuse 1 und andererseits an dem unteren Gehäuse 2 angeordnet sind, wird einerseits durch den zwischen beiden Schalenteilen 11 und 12 gebildeten Winkel und andererseits durch die Länge der Bleche 14 mit den darin angeordneten Schlitzen 17 bestimmt, so daß die maximal erreichbaren Positionen des oberen Teiles der Lenksäule durch Anschläge begrenzt sind.

### BEZUGSZEICHENLISTE:

- 1: Gehäuseteil
- 2: Gehäuseteil
- 3: Lenkwellenteil
- 4: Lenkwellenteil
- 5: Kreuzgelenk
- 6: Lenkrad
- 7: Gelenk
- 8: Mittellängsachse
- 9: Bolzenachse
- 10: Bolzen
- 11: Schalenteil
- 12: Schalenteil
- 13: Klemmvorrichtung
- 14: Blech
- 15: Spannbolzen
- 16: Handhabe
- 17: Schlitz
- 18: Bolzen
- 19: Schraubenfeder

## Patentansprüche

1. Lenksäule für ein im Lenkrad mit einem aufblasbaren Gassack ausgerüstetes Kraftfahrzeug, bei der durch ein Kreuzgelenk miteinander verbundene Teile einer Lenkwelle in einem Gehäuse aus einem beweglichen oberen Gehäuseteil und einem an der Karosserie festen unteren Gehäuseteil drehbar gelagert sind und beide Teile des Gehäuses durch ein Gelenk mit einer etwa horizontal in der Ebene des Achsenkreuzes des Kreuzgelenks verlaufenden Gelenkachse verbunden sowie miteinander verriegelbar sind, dadurch gekennzeichnet, daß das Gelenk (7) der beiden Teile des Gehäuses (1,2) mit einem Abstand von und oberhalb der Mittellängsachse (8) der Lenksäule angeordnet und beide Gehäuseteile (1,2) nur in einer solchen Position miteinander verriegelbar sind, in der die Achsen der durch das Kreuzgelenk (5) miteinander verbundenen Lenkwellenteile (3,4) einen zum Gelenk (7) der beiden Gehäuseteile (1,2) offenen Winkel miteinander einschließen, wobei die Verriegelung beider Gehäuseteile (1,2) durch Rückstoßkräfte der Gassackzündung beim Aufblasen des Gassacks überwindbar ist.

2. Lenksäule nach Anspruch 1, dadurch gekennzeichnet, daß ein scharnierartiges Gelenk (7) beider Gehäuseteile (1,2) mit seiner Achse (9) außerhalb des Gehäuses (1,2,11,12) angeordnet ist.

3. Lenksäule nach den Ansprüchen 1 und 2 mit einer Klemmvorrichtung zur Verriegelung der beiden Gehäuseteile durch Reibungsschluß, dadurch gekennzeichnet, daß der Reibungsschluß der Klemmvorrichtung durch die Rückstoßkräfte der Gassackzündung beim Aufblasen des Gassacks überwindbar sind.

4. Lenksäule nach den Ansprüchen 1 bis 3, dadurch gekennzeichnet, daß die den Reibungsschluß zwischen den beiden Teilen (1,2) des Gehäuses bewirkende Klemmvorrichtung (13) auf der dem Gelenk (7) zwischen den beiden Teilen (1,2) des Gehäuses diametral zur Mittellängsachse (8) gegenüberliegenden Seite angeordnet ist.

5. Lenksäule nach den Ansprüchen 1 bis 4, dadurch gekennzeichnet, daß die Klemmvorrichtung (13) aus ineinandergreifenden, abwechselnd an den Gehäuseteilen (1,2) angeordneten Lamellenblechen (14) und wenigstens einem dazu querverlaufend angeordneten, einem Schlitz in den Lamellenblechen durchdringenden Spannbolzen (15) besteht.

6. Lenksäule nach den Ansprüchen 1 bis 5, dadurch gekennzeichnet, daß im Bereich der Klemmvorrichtung (13) zwischen den beiden Teilen (1,2) des Gehäuses federnde Dämpfungsmittel (19) vorgesehen sind, die der Schwerkraft aus dem Gewicht des oberen Gehäuseteiles (2) entgegenwirken.

7. Lenksäule nach den Ansprüchen 1 bis 6, dadurch gekennzeichnet, daß die beiden Gehäuseteile (1,2) in der Schwenkposition. in der die Achsen der beiden Lenkwellenteile zueinander gestreckt sind, eine Zwangsverriegelung aufweisen.

## Claims

1. Steering column for a motor vehicle equipped with an inflatable air bag in the steering wheel, wherein parts of a steering shaft which are connected to one another by a universal joint are rotatably supported in a housing comprising a movable upper housing part and a body-fixed lower housing part and both parts of the housing are connected and lockable with one another by means of a joint having a joint axis extending substantially horizontally in the plane of the axis intersection of the universal joint, characterized in that the joint (7) of the two parts of the housing (1, 2) is disposed at a distance from and above the central longitudinal axis (8) of the steering column and both housing parts (1, 2) are lockable with one another only in a position in which the axes of the steering shaft parts (3, 4) connected to one another by the universal joint (5) form an angle which is open towards the joint (7) of the two housing parts (1, 2), the locking of both housing parts (1, 2) being surmountable by recoil forces of the air bag ignition upon inflation of the air bag.

2. Steering column according to claim 1, characterized in that a hinge-like joint (7) of both housing parts (1, 2) is disposed with its axis (9) outside of the housing (1, 2, 11, 12).

3. Steering column according to claims 1 and 2 having a clamping device for locking the two housing parts through frictional engagement, characterized in that the frictional engagement of the clamping device is surmountable by the recoil forces of the air bag ignition upon inflation of the air bag.

4. Steering column according to claims 1 to 3, characterized in that the clamping device (13) effecting the frictional engagement between the two parts (1, 2) of the housing is disposed at the side which is, relative to the central longitudinal axis, diametrically opposite the joint (7) between the two parts (1, 2) of the housing.

5. Steering column according to claims 1 to 4, characterized in that the clamping device (13) comprises intermeshing lamellar plates (14) disposed alternately on the housing parts (1, 2) and at least one clamping bolt (15), which is arranged so as to extend at right angles to the lamellar plates and penetrates a slot in the lamellar plates.

6. Steering column according to claims 1 to 5, characterized in that provided in the region of the clamping device (13) between the two parts (1, 2) of the housing are resilient damping means (19) which counteract the gravitational force arising from the weight of the upper housing part (1).

7. Steering column according to claims 1 to 6, characterized in that the two housing parts (1, 2) have positive locking in the swivel position in which the axes of the two steering shaft parts form a straight line.

## Revendications

1. Colonne de direction pour véhicule à moteur équipé d'un coussin de gaz gonflable, dans lequel des pièces d'un arbre de direction reliées entre elles par un joint de cardan sont montées rotatives dans un carter à partir d'une partie supérieure mobile de carter et d'une partie de carter inférieure fixe vis à vis de la carrosserie, et dans lequel les deux parties du carter sont reliées et verrouillables l'une à l'autre par un joint comportant un axe de joint s'étendant sensiblement de manière horizontale dans le plan du système d'axes du joint de cardan, caractérisée en ce que le joint (7) des deux parties du carter (1, 2) est disposé avec un écartement par rapport à l'axe longitudinal médian (8) de la colonne de direction et au-dessus de cet axe, et en ce que les deux parties de carter (1, 2) ne sont verrouillables entre elles que dans une position dans laquelle les axes des parties (3, 4) de l'arbre de direction reliées ensemble par le joint de cardan (5) délimtent un angle ouvert à l'articulation (7) des deux parties de boîtier (1, 2), de sorte que le verrouillage de ces deux parties de boîtier (1, 2) peut être surmonté par les forces de recul de l'amorçage du coussin de gaz lors du gonflage dudit coussin.

2. Colonne de direction selon la revendication 1, caractérisée en ce qu'une articulation (7) du type charnière entre les deux parties de boîtier (1, 2) est disposée avec son axe (9) à l'extérieur du carter (1, 2, 11, 12).

3. Colonne de direction selon les revendications 1 et 2, comportant un dispositif de serrage pour le verrouillage des deux parties de boîtier par fermeture par friction, caractérisée en ce que la fermeture par friction du dispositif de serrage peut être surmontée par les forces de recul de l'amorçage du coussin de gaz lors du gonflage du coussin de gaz.

4. Colonne de direction selon les revendications 1 à 3, caractérisée en ce que le dispositif de serrage (13) provoquant la fermeture par friction entre les deux parties (1, 2) du carter est disposé sur le côté du joint (7) situé entre les deux parties (1, 2) du carter diamétralement à l'axe longitudinal médian (8).

5. Colonne de direction selon les revendications 1 à 4, caractérisée en ce que le dispositif de serrage (13) est constitué de tôles (14) en lamelles assemblées les unes aux autres de manière alternative sur les parties de carter (1, 2), et d'au moins un boulon de tension (15) disposé transversalement aux tôles en lamelles et traversant une fente ménagée dans ces dernières.

6. Colonne de direction selon les revendications 1 à 5, caractérisée en ce que des moyens d'amortissement élastiques (19) sont prévus dans la zone du dispositif de serrage (13) entre les deux parties (1, 2) du carter, et ces moyens agissent à l'encontre de la force de gravité de la partie supérieure (2) du carter.

7. Colonne de direction selon la revendication 1 à 6, caractérisée en ce que les deux parties de carter (1, 2) sont pourvues d'un système de verrouillage forcé dans la position de basculement, dans laquelle les axes des deux parties de l'arbre de direction se rencontrent.
